# EUROPÄISCHE PATENTSCHRIFT

(11) **EP 2 369 810 B1**
(45) Veröffentlichungstag und Bekanntmachung des Hinweises auf die Patenterteilung: **13.04.2016**
(21) Anmeldenummer: 11153992.0
(22) Anmeldetag: 10.02.2011
(51) Int. Cl.: G06F 21/55, H04L 29/06

(54) **Verfahren und System zum Schutz eines Kommunikationssystems oder eines Kommunikationsnetzwerkes**
Method and system for protecting a communication system or network
Procédé et système de protection d'un système de communication ou d'un réseau de communication

(30) Priorität: 16.03.2010 DE 102010011587
(43) Veröffentlichungstag der Anmeldung: 28.09.2011
(73) Patentinhaber: Siemens Aktiengesellschaft, 80333 München (DE)
(72) Erfinder: Bußer, Jens-Uwe, 81739, München (DE)

(56) Entgegenhaltungen:
- JP-A- 2003 124 924
- LEE ET AL: "DDoS attack detection method using cluster analysis", EXPERT SYSTEMS WITH APPLICATIONS, OXFORD, GB, Bd. 34, Nr. 3, 22. Dezember 2007 (2007-12-22), Seiten 1659-1665, XP022399665, ISSN: 0957-4174, DOI: DOI:10.1016/J.ESWA.2007.01.040
- SHUI YU ET AL: "Entropy-Based Collaborative Detection of DDOS Attacks on Community Networks", PERVASIVE COMPUTING AND COMMUNICATIONS, 2008. PERCOM 2008. SIXTH ANNUAL IEEE INTERNATIONAL CONFERENCE ON, IEEE, PISCATAWAY, NJ, USA, 17. März 2008 (2008-03-17), Seiten 566-571, XP031250444, ISBN: 978-0-7695-3113-7
- KE LI ET AL: "Effective DDoS Attacks Detection Using Generalized Entropy Metric", 8. Juni 2009 (2009-06-08), ALGORITHMS AND ARCHITECTURES FOR PARALLEL PROCESSING, SPRINGER BERLIN HEIDELBERG, BERLIN, HEIDELBERG, PAGE(S) 266 - 280, XP019124765, ISBN: 978-3-642-03094-9 * Seite 271, Zeilen 5-12 *

## Beschreibung

Die Erfindung betrifft ein Verfahren und ein System zum Schutz eines Kommunikationssystems, insbesondere eines Computersystems, durch welches Nachrichten mit anderen Kommunikationssystemen ausgetauscht werden, oder eines Kommunikationsnetzwerkes, insbesondere eines Computernetzwerkes, in welchem Nachrichten ausgetauscht werden.

Die Vernetzung vieler Kommunikationsgeräte, wie z.B. Computer, und lokaler Kommunikationsnetzwerke zu einem weltweiten Netzwerk, wie dem Internet, hat im Laufe der letzten Jahrzehnte die Effektivität und Anwenderfreundlichkeit vieler Prozesse im geschäftlichen, öffentlichen und privaten Bereich stark erhöht. Mit zunehmender Komplexität der Anwendungen stieg jedoch auch die Anzahl inhärenter Fehler und Schwachstellen, welche auch missbräuchlich, z.B. zur unberechtigten Nutzung oder zur Manipulation von Systemdiensten oder auch einfach zur Störung von Systemabläufen, genutzt werden können. Obwohl Hersteller zunehmend versuchen, solche Schwachstellen bereits bei der (Software-) Entwicklung durch geeignete Programmiertechniken und Qualitätssicherungsprozesse zu reduzieren oder diese nach Bekanntwerden zumindest baldmöglichst zu beseitigen, wächst die Anzahl der jährlich bekanntwerdenden Schwachstellen in Computersystemen und Computernetzwerken stetig.

Zur Entdeckung von unberechtigten Aktionen (Angriffen) werden häufig spezielle Systeme eingesetzt, um den Datenverkehr in einem Netzwerk - im Folgenden kurz als Netzwerkverkehr bezeichnet - zu überwachen. Abhängig von der Reaktion auf entdeckte Angriffe unterscheidet man dabei zwischen sogenannten "Intrusion Detection Systemen" (IDS), welche bei Auffälligkeiten lediglich einen Alarm, z.B. in Form einer Benachrichtigung eines Systemadministrators, auslösen, und sogenannten "Intrusion Prevention Systemen" (IPS), welche auffällige Datenströme auch blockieren oder ändern, um einen Angriff zu unterbrechen oder zu erschweren. Man unterscheidet dabei weiter zwischen hostbasierten Systemen, bei welchen das System auf dem Kommunikationssystem installiert ist, und netzwerkbasierten Systemen, die Datenpakete in dem Netzwerk an einem zentralen Knoten (Hub, Switch, Router, etc.) aufzeichnen und auswerten.

Die am weitesten verbreiteten IDS, wie zum Beispiel SNORT, arbeiten überwiegend signatur-basiert. So liest das netzwerkbasierte System SNORT beispielsweise direkt an der Netzwerkkarte den gesamten vorbeikommenden Netzwerkverkehr mit und vergleicht den Inhalt der Datenpakete mit charakteristischen Mustern von bekannten Angriffen. Diese Muster werden im Allgemeinen als Signaturen bezeichnet. Diese Signaturen müssen für einzelne Angriffe aufwändig erzeugt werden. Bei der Konfiguration eines installierten IDS müssen die Muster der relevanten Angriffe dann ausgewählt und in Form einer Konfigurationsdatei oder ähnlichem dem IDS bekannt gemacht werden. Sobald neue Schwachstellen bekannt werden oder Angriffe auf bereits bekannte Schwachstellen modifiziert werden, sind neue Signaturen zu erzeugen und die IDS-Konfigurationsdateien entsprechend zu erweitern.

Andere Ansätze der Datenverkehrsanalyse erkennen Scanning- oder Flooding-Angriffe anhand deren stark veränderten Verkehrsaufkommens bereits in der TCP/IP-Schicht.

Einen weiteren Ansatz stellt der Einsatz selbstlernender, anomaliebasierter IDS dar. Diese lernen in einer Normal- oder Lernphase erlaubte Muster im Datenstrom, wie zum Beispiel Häufigkeiten von Byte-Sequenzen (N-Gramm). In der Betriebsphase werden diese gelernten Muster dann mit den gelesenen Mustern verglichen und Abweichungen werden als Hinweise auf Störungen oder Angriffe gewertet.

Zur Sicherung der Kommunikation werden Nachrichten oft mit kryptografischen Prüfsummen ausgestattet. Dies können beispielsweise asymmetrische digitale Signaturen sein, welche der Absender einer Nachricht mit seinem privaten Schlüssel erstellt. Der Empfänger der Nachricht kann die Authentizität und Integrität der Nachricht oder des signierten Textes prüfen, indem er die digitale Signatur mit dem dazu passenden öffentlichen Schlüssel des Senders verifiziert. Dieser öffentliche Schlüssel wird typischer Weise entweder vorab unter den Kommunikationsteilnehmern verteilt oder er ist als Teil eines digitalen Zertifikats in der Nachricht selbst enthalten. Alternativ zu digitalen Signaturen können auch andere kryptografische Verfahren, wie etwa Hash-Werte mit Schlüssel, z.B. Hashed Message Authentication Codes (HMAC), verwendet werden, bei denen Sender und Empfänger der Nachricht den gleichen symmetrischen Schlüssel besitzen.

Zur Verteilung der benötigten symmetrischen oder asymmetrischen Schlüssel ist, insbesondere in einer großen und/oder verteilten Anlage, ein umfangreiches und aufwendiges Schlüsselmanagement erforderlich. Dies kann zum Beispiel durch Einsatz einer sogenannten "Public Key Infrastructure" (PKI) realisiert werden. Zum Beispiel im Bereich der Industrieautomatisierung wird die Verteilung von Schlüsseln und/oder Zertifikaten vorzugsweise in der Engineering-Phase erfolgen. Dabei wird vorteilhaft auf Gerätezertifikate oder ähnliche Sicherheitszertifikate (Security Credentials) aufgesetzt, welche bereits bei der Herstellung in die entsprechenden Geräte integriert wurden. Eine unsichere, das heißt unverschlüsselte Übertragung vertraulicher Daten sollte dabei auch während dieser Phase vermieden werden, selbst wenn die Anlage noch nicht an öffentliche Kommunikations- oder Datennetzwerke angekoppelt ist.

Ist in speziellen Anwendungsfällen die Verwendung von sicheren Kommunikationsprotokollen gewünscht oder sogar vorgeschrieben, wird das entsprechende Schlüsselmanagement aber für zu aufwändig erachtet oder die notwendige kryptografische Funktionalität ist in einigen an der Datenkommunikation beteiligten Geräten nicht oder noch nicht implementiert, so können von einem Absender einer Nachricht z.B. anstelle echter kryptografischer Prüfsummen nur Dummywerte in Form selbst erdachter, häufig sehr einfacher Zeichenfolgen in die entsprechenden Datenfelder eingetragen werden, welche anschließend vom Empfänger der Nachricht auch nicht geprüft werden. Damit kann ein Kommunikationsprotokoll scheinbar in einem Sicherheitsmodus betrieben werden, ohne dass allerdings Kommunikationssicherheit wirklich gewährleistet ist. Ist ein derartiger Betrieb einmal projektiert oder gestartet, so ist es oft schwierig, diese Sicherheitslücke später zu finden und zu korrigieren.

Auch werden teilweise sogenannte Pseudo-Verschlüsselungen verwendet. Dabei wird anstatt eines echten kryptografischen Algorithmus eine Operation, wie z.B. "XOR 0xAC", auf jedes Byte der zu verschlüsselnden Daten angewendet. Auf diese Weise werden an sich leicht lesbare ASCII-Zeichen, wie Buchstaben oder Ziffern, in den Bereich der Sonderzeichen verschoben und umgekehrt. Damit sind die Nachrichteninhalte zwar mit einem Editor nicht mehr lesbar und erscheinen daher verschlüsselt, echte Kommunikationssicherheit wird aber auch dadurch in keinster Weise gewährleistet.

Bekannte IDS sind in der Lage, Nachrichten auch hinsichtlich der verwendeten Kommunikationsprotokolle zu untersuchen. Die Verwendung unsicherer Protokolle und Protokoll-Modi, wie zum Beispiel veralteter Versionen oder Verwendung ohne Sicherheitsmerkmale, kann dabei unterbunden werden, indem man für signatur-basierte IDS entsprechende Muster (Signaturen) erzeugt oder bei selbstlernenden, anomaliebasierten IDS in der Trainingsphase entsprechende Muster nicht lernt. Dabei orientiert sich das IDS üblicher Weise an Informationen in den Kopfdaten (Header) der entsprechenden Protokollschicht, das heißt das IDS vergleicht gelesene Datenpakete nur dann mit abgespeicherten Mustern, wenn in den Kopfdaten ein entsprechendes Flag gesetzt ist, welches auf kryptografische Daten hinweist. Ist das entsprechende Flag, beispielsweise für eine digitale Signatur gesetzt, die digitale Signatur aber durch Dummy-Bytefolgen wie "0000...0", "abcde..." oder "test..." ersetzt, so wird dies von herkömmlichen IDS nicht erkannt. JP-A- 2003 124924 offenbart ein Verfahren zum Erkennen der Entropie von Datenfeldern.

Der Erfindung liegt daher die Aufgabe zugrunde, ein Verfahren und ein System zum Schutz eines Kommunikationssystems, oder eines Kommunikationsnetzwerkes bereit zu stellen, welches einen erhöhten Sicherheitsstandard gewährleistet.

Die Aufgabe wird gelöst durch ein Verfahren zum Erkennen von Dummy-Werten oder einer Pseudoverschlüsselung in einem Kommunikationssystem, insbesondere eines Computersystems, durch welches Nachrichten mit anderen Kommunikationssystemen ausgetauscht werden, oder eines Kommunikationsnetzwerkes, insbesondere eines Computernetzwerkes, in welchem Nachrichten ausgetauscht werden, bei dem Datenfelder von empfangenen Nachrichten oder Nachrichten eines Netzwerkverkehrs gelesen werden, kryptografische Datenfelder hinsichtlich ihrer Entropierate oder hinsichtlich mindestens einer die Entropierate charakterisierenden Größe ausgewertet werden und ein Alarm ausgelöst wird, falls eine vorgebbare Mindestentropierate oder ein Grenzwert für die die Entropierate charakterisierende Größe nicht erreicht wird.

Die Aufgabe wird auch gelöst durch ein System zum Erkennen von Dummy-Werten oder einer Pseudoverschlüsselung in einem Kommunikationssystem, insbesondere eines Computersystems, durch welches Nachrichten mit anderen Kommunikationssystemen ausgetauscht werden, oder eines Kommunikationsnetzwerkes, insbesondere eines Computernetzwerkes, in welchem Nachrichten ausgetauscht werden, mit einem Datenmonitor zum Lesen von Datenfeldern von empfangenen Nachrichten oder Nachrichten eines Netzwerkverkehrs und einer Auswerteeinheit zum Auswerten von kryptografischen Datenfeldern hinsichtlich ihrer Entropierate oder hinsichtlich mindestens einer die Entropierate charakterisierenden Größe und zum Auslösen eines Alarms, falls eine vorgebbare Mindestentropierate oder ein Grenzwert für die die Entropierate charakterisierende Größe nicht erreicht ist.

Dummy-Werte zeichnen sich in der Regel dadurch aus, dass sie im Vergleich zu echten kryptografischen Daten, das heißt Daten welche mit Hilfe eines kryptografischen Verfahrens, einer kryptografischen Funktion oder eines kryptografischen Algorithmus bearbeitet wurden, eine deutlich geringere Entropie oder Entropierate aufweisen. Dies ist insbesondere dadurch begründet, dass Dummy-Werte oder Pseudo-Verschlüsselungen keine rein zufälligen Zeichenfolgen umfassen, sondern in der Regel aus sehr einfachen und/oder sinnhaften Zeichenfolgen bestehen. Durch Auswertung der Entropierate, welche einen Vergleich der Entropien von Nachrichten unterschiedlicher Länge ermöglicht, oder einer die Entropierate charakterisierenden Größe, wie zum Beispiel der Häufigkeit des Auftretens bestimmter Zeichen oder von Zeichen aus einem vorgegebenen begrenzten Zeichenvorrat, ist es somit möglich, die Inhalte kryptografischer Datenfelder dahingehend zu untersuchen, ob sie wirklich kryptografisch bearbeitete Daten enthalten oder nur mit Dummy-Werten oder Pseudo-Verschlüsselungen gefüllt wurden. Unter dem Begriff "kryptografische Datenfelder" seien dabei alle Datenfelder einer Nachricht verstanden, für welche eine im Vorfeld der Übermittlung stattgefundene kryptografische Bearbeitung erwartet werden kann. Darunter fallen insbesondere digitale Signaturen, Hash-Werte mit Schlüssel oder verschlüsselte Texte. Deutet die Entropierate oder die die Entropierate charakterisierende Größe darauf hin, dass lediglich Dummy-Werte oder Pseudo-Verschlüsselungen verwendet wurden, so wird ein Alarm, z.B. in Form einer Benachrichtigung eines Systemadministrators, ausgelöst, der es erlaubt gegebenenfalls geeignete Gegenmaßnahmen einzuleiten.

Da das Auftreten und die Positionierung von kryptografischen Datenfeldern innerhalb einer Nachricht protokollabhängig ist, ist es vorteilhaft, die auszuwertenden Datenfelder, vorzugsweise im Rahmen der Systemkonfiguration, in Abhängigkeit von einem verwendeten Kommunikationsprotokoll festzulegen.

Gemäß einer Ausführungsform der Erfindung werden einzelne Bytes des auszuwertenden Datenfeldes ausgewertet und ein Alarm ausgelöst, falls mindestens ein vorgebbarer Anteil von den Bytes zugeordneten Zeichen aus mindestens einem vorgebbaren ersten Teilbereich eines Zeichenvorrats stammt.

Ein zufälliger Text, also zum Beispiel eine "echte digitale Signatur", ein "echter HMAC" oder eine "echte Textverschlüsselung" weist bei 8 bit pro Byte und im Fall einer Gleichwahrscheinlichkeit aller Zeichen des Zeichenvorrats eine Entropierate von 8 bit pro Textbyte auf. Besteht ein Text dagegen nur aus druckbaren ASCII-Zeichen (Zeichenvorrat von 95 verschiedenen Zeichen) so beträgt die Entropierate nur noch ca. 6.5 bit pro Textbyte und bei Texten, welche nur aus Kleinbuchstaben und Ziffern (Zeichenvorrat von 36 verschiedenen Zeichen) bestehen, sogar nur noch ca. 5.2 bit pro Textbyte. Die angegebenen Entropieraten für druckbare ASCII-Zeichen und Kleinbuchstaben mit Ziffern sind dabei lediglich obere Abschätzungen. Da in der Realität die Zeichenhäufigkeit ungleich verteilt ist, sind die Entropieraten tatsächlich sogar noch geringer. Somit stellt die Häufigkeit des Auftretens von Zeichen aus einem Teilbereich des gesamten Zeichenvorrats, welcher bei einem 8-bit-System 2⁸ = 256 Zeichen umfasst, eine die Entropierate charakterisierende Größe dar, welche erfindungsgemäß ausgewertet werden kann.

So kann beispielsweise festgelegt werden, dass ein Alarm dann ausgelöst wird, wenn mindestens x Zeichen oder x% der Zeichen druckbare ASCII-Zeichen sind und/oder mindestens y Zeichen oder y% der Zeichen Kleinbuchstaben oder Ziffern sind. Durch Vergrößerung von x und/oder y kann eine Rate von Fehlalarmen (false positives) reduziert werden. Ein Fehlalarm wird immer dann erzeugt, wenn z.B. eine "echte digitale Signatur" oder ein "echter HMAC" - je nach Festlegung von x und/oder y - nahezu ausschließlich aus druckbaren ASCII-zeichen oder aus Kleinbuchstaben und Ziffern besteht. Dabei ist zu berücksichtigen, dass eine zufällige 160bit-Signatur/HMAC sich mit einer Wahrscheinlichkeit von P = (95/256)²⁰ ≈ 2,5*10⁻⁹ nur aus druckbaren ASCII-Zeichen und mit einer Wahrscheinlichkeit von P = (36/256)²⁰ ≈ 9*10⁻¹⁸ nur aus Kleinbuchstaben und Ziffern zusammensetzt. Auch bei diesen Abschätzungen wurde aber wieder eine gleichverteilte Zeichenhäufigkeit angenommen. Neben druckbaren ASCII-Zeichen, Kleinbuchstaben und Ziffern können selbstverständlich auch weitere Teilbereiche oder Untergruppen des Zeichenvorrats, wie z.B. Großbuchstaben, zur Auswertung herangezogen werden.

Gemäß einer weiteren Ausführungsform der Erfindung werden einzelne Bytes des auszuwertenden Datenfeldes, vorzugsweise auch über mehrere Nachrichten hinweg, statistisch ausgewertet und ein Alarm ausgelöst, falls den Bytes zugeordnete Zeichen, welche aus einem vorgebbaren zweiten Teilbereich des Zeichenvorrat stammen, in statistisch signifikanter Weise nicht mit gleicher Häufigkeit vorkommen. Auf diese Weise lassen sich auch Pseudo-Verschlüsselungen, wie "XOR 0xAC", und Pseudo-Signaturen mit sich ändernden, nicht druckbaren ASCII-Zeichen, wie "0x00 0x03 0x09..." erkennen, da dabei die einzelnen Bytewerte, also z.B. die Werte von 0x00 bis 0xFF, eben nicht mit gleicher Häufigkeit auftauchen. Bei der Festlegung eines entsprechenden Grenzwertes hinsichtlich der "gleichen Häufigkeit" wird vorteilhaft auch eine erwartete statistische Signifikanz berücksichtigt.

Pseudo-Verschlüsselungen und Pseudo-Signaturen unterscheiden sich in aller Regel auch dadurch von "echten Verschlüsselungen" oder "echten Signaturen", dass aufeinanderfolgende Bytes nicht vollkommen zufällig erzeugt wurden, sondern eine erkennbare Korrelation aufweisen, welche z.B. auf der Anwendung einer festen Regel bei der Erzeugung der Bytefolge, zurückzuführen ist. Demgemäß sieht eine weitere Ausführungsform der Erfindung vor, dass aufeinander folgende Bytes des auszuwertenden Datenfeldes, vorzugsweise auch über mehrere Nachrichten hinweg, ausgewertet werden und ein Alarm ausgelöst wird, wenn eine Korrelation zwischen den aufeinanderfolgenden Bytes erkannt wird.

Um den Auswerteaufwand begrenzt zu halten, ist es möglich, die kryptografischen Datenfelder einer Nachricht nur dann auszuwerten, wenn in den Kopfdaten der Nachricht ein Flag gesetzt ist, welches auf die kryptografische Datenfelder hinweist.

Besonders vorteilhaft wird das erfindungsgemäße System in ein IDS, also ein System zum Erkennen von Angriffen auf ein Kommunikationssystem, insbesondere ein Computersystem, oder ein Kommunikationsnetzwerk, insbesondere ein Computernetzwerk, integriert, so dass ohnehin vorhandene Einheiten des IDS wie der Datenmonitor oder Funktionen wie die Alarmierung genutzt werden können, um das erfindungsgemäße Verfahren auszuführen.

Weitere Merkmale und Vorteile der Erfindung ergeben sich aus Ausführungsbeispielen, welche im Folgenden anhand der Zeichnungen erläutert werden. Es zeigen:
- Fig. 1: eine schematische Darstellung eines erfindungsgemäßen Systems zum Schutz eines Kommunikationssystems oder eines Kommunikationsnetzwerkes und
- Fig. 2: ein Flussdiagramm einer Ausführungsform des erfindungsgemäßen Verfahrens.

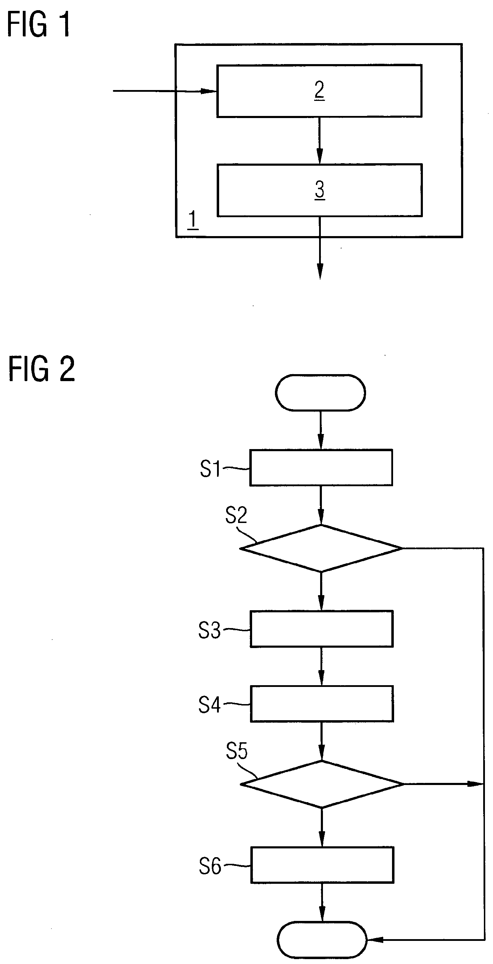

Das in Figur 1 schematisch dargestellte System 1 zum Schutz eines Kommunikationssystems, insbesondere eines Computersystems, durch welches Nachrichten mit anderen Kommunikationssystemen ausgetauscht werden, oder eines Kommunikationsnetzwerkes, insbesondere eines Computernetzwerkes, in welchem Nachrichten ausgetauscht werden, weist einen Datenmonitor 2 und eine Auswerteeinheit 3 auf. Der Datenmonitor 2 liest sämtliche vorbeikommenden Nachrichten und Datenströme und zeichnet diese auf. Das System 1 kann entweder auf einem Kommunikationssystem installiert sein, so dass der Datenmonitor 2 alle von dem Kommunikationssystem empfangenen Datenpakete lesen und aufzeichnen kann, oder in dem Netzwerk, zum Beispiel direkt an einem zentralen Knoten (Hub, Switch, Router, etc.), so dass der Datenmonitor 2 den gesamten vorbeikommenden Datenverkehr des Kommunikationsnetzwerkes lesen kann. Soweit es sich bei den gelesenen Datenfeldern um kryptografische Datenfelder handelt, das heißt Datenfelder, für welche eine im Vorfeld der Übermittlung stattgefundene kryptografische Bearbeitung erwartet werden kann, wertet die Auswerteeinheit 3 für diese Datenfelder die Entropierate oder eine diese charakterisierende Größe, wie etwa die Häufigkeit des Vorkommens bestimmter Zeichengruppen, wie druckbare ASCII-Zeichen, Kleinbuchstaben und/oder Ziffern, aus und vergleicht diese mit vorgegebenen Grenzwerten. Wird eine vorgebbare Mindestentropierate oder ein Grenzwert für die die Entropierate charakterisierende Größe nicht erreicht, so löst die Auswerteeinheit einen Alarm aus. Der Alarm kann dabei zum Beispiel in Form einer Benachrichtigung eines Systemadministrators realisiert sein.
Die durch die Auswerteeinheit 3 auszuwertenden kryptografischen Datenfelder werden vorteilhaft im Vorfeld der Inbetriebnahme des Systems 1, insbesondere im Rahmen der Systemkonfiguration, in Abhängigkeit von einem verwendeten Kommunikationsprotokoll festegelegt und in dem System 1 hinterlegt. Alternativ dazu können sie aber auch mit selbstlernenden Verfahren trainiert werden, wobei darauf zu achten ist, dass während der Lern- oder Trainingsphase alle zu prüfenden kryptografischen Felder mit "echten digitalen Signaturen", "echten HMACs" oder "echten Textverschlüsselungen" belegt sind.

Vorteilhaft ist das System 1 in ein System zum Erkennen von Angriffen auf ein Kommunikationssystem oder ein Kommunikationsnetzwerk (Intrusion Detection System; IDS) integriert. Derartige Systeme weisen ebenfalls einen Datenmonitor zum Lesen von Datenpaketen sowie eine Auswerteeinheit zum Auswerten der Datenpakete, z.B. durch Vergleich mit abgespeicherten Mustern, und gegebenenfalls Auslösen eines Alarms auf. Somit bietet die Integration in ein bestehendes IDS den Vorteil, dass der Datenmonitor des IDS und auch Teile der Auswerteeinheit des IDS, wie zum Beispiel die Funktionsgruppe zum Auslösen eines Alarms durch das erfindungsgemäße System mitgenutzt werden können.

Figur 2 zeigt einen möglichen Ablauf einer Ausführungsform des erfindungsgemäßen Verfahrens anhand eines Flussdiagramms. In einem Verfahrensschritt S1 werden Datenpakete D und die darin enthaltenen Datenfelder von empfangenen Nachrichten oder Nachrichten eines Netzwerkverkehrs durch den Datenmonitor 2 gelesen. In einem optionalen Verfahrensschritt S2 wird geprüft, ob in den Kopfdaten der Nachrichten mindestens ein Flag gesetzt ist, welches auf kryptografische Datenfelder hinweist. Ist das nicht der Fall wird keine weitere erfindungsgemäße Auswertung durchgeführt. Weist eine Information in den Kopfdaten auf kryptografische Datenfelder hin, so werden vorteilhaft in einem Verfahrensschritt S3 diejenigen Datenfelder in Abhängigkeit von dem verwendeten Kommunikationsprotokoll identifiziert, welche kryptografische Daten enthalten müssten und in darauffolgenden Verfahrensschritten weiter auszuwerten sind.

In einem Verfahrensschritt S4 werden die kryptografischen Datenfelder hinsichtlich ihrer Entropierate oder hinsichtlich mindestens einer die Entropierate charakterisierenden Größe ausgewertet. Dazu wird zum Beispiel die Häufigkeit des Auftretens von Zeichen aus einem vorgegeben Teilbereich des gesamten Zeichenvorrats oder auch eine mögliche Korrelation zwischen aufeinanderfolgenden Textbytes ausgewertet. Diese Auswertungen können auch über mehrere Nachrichten hinweg durchgeführt werden. Die Entropierate oder die diese charakterisierende Größe wird anschließend in einem Verfahrensschritt S5 mit vorgegebenen Mindestentropieraten bzw. Grenzwerten verglichen. Werden die vorgegeben Schwellwerte erreicht, so wird das als Indiz gewertet, dass die kryptografischen Datenfelder "echte digitale Signaturen", "echte HMACs" oder "echte Textverschlüsselungen" beinhalten und damit ein gesicherter Betrieb gewährleistet ist. Werden die vorgegeben Schwellwerte dagegen nicht erreicht, so wird in einem Schritt S6 ein Alarm ausgelöst, da dann davon auszugehen ist, dass die kryptografischen Datenfelder lediglich Dummy-Werte oder Pseudo-Verschlüsselungen beinhalten. In Folge des Alarms können dann gegebenenfalls geeignete Gegenmaßnahmen eingeleitet werden.

## Patentansprüche

1. Verfahren zum Erkennen von Dummy-Werten oder einer Pseudo-Verschlüsselung in einem Kommunikationssystem, insbesondere ein Computersystem, durch welches Nachrichten mit anderen Kommunikationssystemen ausgetauscht werden, oder in einem Kommunikationsnetzwerk, insbesondere in einem Computernetzwerk, in welchem Nachrichten ausgetauscht werden, bei dem
- Datenfelder von empfangenen Nachrichten oder Nachrichten eines Netzwerkverkehrs gelesen werden,
- kryptografische Datenfelder hinsichtlich ihrer Entropierate oder hinsichtlich mindestens einer die Entropierate charakterisierenden Größe ausgewertet werden und
- ein Alarm ausgelöst wird, falls eine vorgebbare Mindestentropierate oder ein Grenzwert für die die Entropierate charakterisierende Größe nicht erreicht wird.

2. Verfahren nach Anspruch 1, wobei die auszuwertenden Datenfelder in Abhängigkeit von einem Kommunikationsprotokoll festgelegt werden.

3. Verfahren nach Anspruch 1, wobei einzelne Bytes des auszuwertenden Datenfeldes ausgewertet werden und ein Alarm ausgelöst wird, falls mindestens ein vorgebbarer Anteil von den Bytes zugeordneten Zeichen aus mindestens einem vorgebbaren ersten Teilbereich eines Zeichenvorrats stammt.

4. Verfahren nach Anspruch 3, wobei der vorgebbare erste Teilbereich des Zeichenvorrats druckbare ASCII-Zeichen und/oder Kleinbuchstaben und/oder Großbuchstaben und/oder Ziffern umfasst.

5. Verfahren nach einem der vorhergehenden Ansprüche, wobei einzelne Bytes des auszuwertenden Datenfeldes ausgewertet werden und ein Alarm ausgelöst wird, falls den Bytes zugeordnete Zeichen, welche aus einem vorgebbaren zweiten Teilbereich eines Zeichenvorrats stammen, nicht mit im Wesentlichen gleicher Häufigkeit vorkommen.

6. Verfahren nach Anspruch 5, wobei die Häufigkeit des Vorkommens über mehrere Nachrichten hinweg ausgewertet wird.

7. Verfahren nach einem der vorhergehenden Ansprüche, wobei aufeinander folgender Bytes des auszuwertenden Datenfeldes ausgewertet werden und ein Alarm ausgelöst wird, wenn eine Korrelation zwischen den aufeinanderfolgenden Bytes erkannt wird.

8. Verfahren nach Anspruch 5, wobei die Bytes über mehrere Nachrichten hinweg ausgewertet werden.

9. Verfahren nach einem der vorhergehenden Ansprüche, wobei die kryptografischen Datenfelder einer Nachricht nur ausgewertet werden, wenn in den Kopfdaten der Nachricht ein Flag gesetzt ist, welches auf die kryptografischen Datenfelder hinweist.

10. System (1) zum Erkennen von Dummy-Werten oder einer Pseudo-Verschlüsselung in einem Kommunikationssystem, insbesondere in einem Computersystem, durch welches Nachrichten mit anderen Kommunikationssystemen ausgetauscht werden, oder in einem Kommunikationsnetzwerk, insbesondere einem Computernetzwerk, in welchem Nachrichten ausgetauscht werden, mit
- einem Datenmonitor (2) zum Lesen von Datenfeldern von empfangenen Nachrichten oder Nachrichten eines Netzwerkverkehrs,
- einer Auswerteeinheit (3) zum
■ Auswerten von kryptografischen Datenfeldern hinsichtlich ihrer Entropierate oder hinsichtlich mindestens einer die Entropierate charakterisierenden Größe und
■ zum Auslösen eines Alarms, falls eine vorgebbare Mindestentropierate oder ein Grenzwert für die die Entropierate charakterisierende Größe nicht erreicht ist.

11. System zum Erkennen von Angriffen auf ein Kommunikationssystem, insbesondere ein Computersystem, oder auf ein Kommunikationsnetzwerk, insbesondere ein Computernetzwerk, welches ein System (1) zum Erkennen von Dummy-Werten oder einer Pseudo-Verschlüsselung in einem Kommunikationssystem oder in einem Kommunikationsnetzwerk gemäß Anspruch 10 umfasst.

## Claims

1. Method for identifying dummy values or a pseudo-encryption in a communication system, particularly a computer system, that exchanges messages with other communication systems or in a communication network, particularly in a computer network, in which messages are exchanged, in which
- data fields of received messages or messages in a network traffic are read,
- cryptographic data fields are evaluated in respect of their entropy rate or in respect of at least one variable characterizing the entropy rate, and
- an alarm is triggered if a prescribeable minimum entropy rate or a limit value for the variable characterizing the entropy rate is not reached.

2. Method according to Claim 1, wherein the data fields to be evaluated are stipulated on the basis of a communication protocol.

3. Method according to Claim 1, wherein single bytes of the data field to be evaluated are evaluated and an alarm is triggered if at least one prescribeable portion of characters associated with the bytes comes from at least one prescribeable first subrange of a character set.

4. Method according to Claim 3, wherein the prescribeable first subrange of the character set comprises printable ASCII characters and/or lower-case letters and/or upper-case letters and/or digits.

5. Method according to one of the preceding claims, wherein single bytes of the data field to be evaluated are evaluated and an alarm is triggered if characters associated with the bytes that come from a prescribeable second subrange of a character set do not occur with essentially the same frequency.

6. Method according to Claim 5, wherein the frequency of occurrence is evaluated over a plurality of messages.

7. Method according to one of the preceding claims, wherein successive bytes of the data field to be evaluated are evaluated and an alarm is triggered if a correlation is identified between the successive bytes.

8. Method according to Claim 5, wherein the bytes are evaluated over a plurality of messages.

9. Method according to one of the preceding claims, wherein the cryptographic data fields of a message are evaluated only if a flag that points to the cryptographic data fields is set in the header data of the message.

10. System (1) for identifying dummy values or a pseudo-encryption in a communication system, particularly in a computer system, that exchanges messages with other communication systems or in a communication network, particularly a computer network, in which messages are exchanged, having
- a data monitor (2) for reading data fields of received messages or messages in a network traffic,
- an evaluation unit (3) for
• evaluating cryptographic data fields in respect of their entropy rate or in respect of at least one variable characterizing the entropy rate, and
• triggering an alarm if a prescribeable minimum entropy rate or a limit value for the variable characterizing the entropy rate is not reached.

11. System for identifying attacks on a communication system, particularly a computer system, or on a communication network, particularly a computer network, that comprises a system (1) for identifying dummy values or a pseudo-encryption in a communication system or in a communication network according to Claim 10.

## Revendications

1. Procédé de détection de valeurs fictives ou d'un pseudo-cryptage dans un système de communication, en particulier un système informatique, par lequel des messages sont échangés avec d'autres systèmes de communication, ou dans un réseau de communication, en particulier dans un réseau informatique, dans lequel des messages sont échangés, procédé dans lequel
- des zones de données de messages reçus ou de messages d'un trafic de réseau sont lues,
- des zones de données cryptographiques sont évaluées quant à leur taux d'entropie ou quant à au moins une grandeur caractérisant le taux d'entropie, et
- une alarme est déclenchée si un taux d'entropie minimal prédéfinissable ou une valeur limite pour la grandeur caractérisant le taux d'entropie n'est pas atteint(e).

2. Procédé selon la revendication 1, les zones de données à évaluer étant fixées en fonction d'un protocole de communication.

3. Procédé selon la revendication 1, différents octets de la zone de données à évaluer étant évalués et une alarme étant déclenchée si au moins une part prédéfinissable de caractères associés aux octets provient d'au moins une première partie prédéfinissable d'un jeu de caractères.

4. Procédé selon la revendication 3, la première partie prédéfinissable du jeu de caractères comprenant des caractères ASCII et/ou des lettres minuscules et/ou des lettres majuscules et/ou des chiffres imprimables.

5. Procédé selon l'une des revendications précédentes, différents octets de la zone de données à évaluer étant évalués et une alarme étant déclenchée si des caractères associés aux octets et provenant d'une seconde partie prédéfinissable d'un jeu de caractères n'apparaissent pas avec sensiblement la même fréquence.

6. Procédé selon la revendication 5, la fréquence d'apparition étant évaluée à travers plusieurs messages.

7. Procédé selon l'une des revendications précédentes, des octets successifs de la zone de données à évaluer étant évalués et une alarme étant déclenché lorsqu'une corrélation entre les octets successifs est détectée.

8. Procédé selon la revendication 5, les octets étant évalués à travers plusieurs messages.

9. Procédé selon l'une des revendications précédentes, les zones de données cryptographiques d'un message n'étant évaluées que si un drapeau signalant les zones de données cryptographiques est placé dans l'en-tête du message.

10. Système (1) de détection de valeurs fictives ou d'un pseudo-cryptage dans un système de communication, en particulier dans un système informatique, par lequel des messages sont échangés avec d'autres systèmes de communication, ou dans un réseau de communication, en particulier un réseau informatique, dans lequel des messages sont échangés, comprenant
- un moniteur de données (2) pour lire des zones de données de messages reçus ou de messages d'un trafic de réseau,
- une unité d'évaluation (3)
■ pour évaluer des zones de données cryptographiques quant à leur taux d'entropie ou quant à au moins une grandeur caractérisant le taux d'entropie, et
■ pour déclencher une alarme si un taux d'entropie minimal prédéfinissable ou une valeur limite pour la grandeur caractérisant le taux d'entropie n'est pas atteint(e).

11. Système de détection d'attaques contre un système de communication, en particulier un système informatique, ou contre un réseau de communication, en particulier un réseau informatique, comprenant un système (1) de détection de valeurs fictives ou d'un pseudo-cryptage dans un système de communication ou dans un réseau de communication selon la revendication 10.
